# EUROPEAN PATENT APPLICATION

(11) **EP 3 264 389 A1**
(43) Date of publication of application: **03.01.2018**
(21) Application number: 17169907.7
(22) Date of filing: 08.05.2017
(51) Int. Cl.: G08G 1/0967, G01C 21/36, G07B 15/06, G08G 1/0962

(54) **CODE PROCESSING DEVICE, CODE PROCESSING METHOD, AND VEHICLE CONTROL DEVICE**

(30) Priority: 17.06.2016 JP 2016121115
(71) Applicant: Kabushiki Kaisha Toshiba, Minato-ku Tokyo 105-8001 (JP)
(72) Inventor: Sakakibara, Shigeyuki, Tokyo 105-8001 (JP)
(74) Representative: Hoffmann Eitle

(57) **Abstract**

According to one embodiment, a code processing device includes an acquisition unit, a lane information generation unit, a code generation unit, and a display processing unit. The acquisition unit acquires traffic information indicating traffic conditions of a lane. The lane information generation unit generates lane information which indicates the traffic conditions of each lane based on the traffic information from each lane. The code generation unit generates a code which indicates the lane information. The display processing unit outputs the code.

## Description

### FIELD

An embodiment described herein relates generally to a code processing device, a code processing method, and a vehicle control device.

### BACKGROUND

In recent years, the technology of automated driving of vehicles has been developed. The automated driving technology controls the traveling direction, the speed, etc. of vehicles based on the surrounding situation.

When entering an expressway or the like, automated vehicles select one lane from a plurality of lanes to enter the expressway. Some of the plurality of lanes are sometimes impassable or congested. Heretofore, there has been no system of showing traffic information for selecting a lane to automated vehicles, likely letting the automated vehicles select and pass through an impassable or congested lane.

### (Object of Invention)

In order to solve the aforementioned problem, a code processing device, a code processing method, and a vehicle control device are provided which are able to contribute to selection of a lane according to the conditions of the lane.

### BRIEF DESCRIPTION OF THE DRAWINGS

FIG. 1 is a block diagram showing a configuration example of a road system according to an embodiment.
FIG. 2 is a block diagram showing a configuration example of a lane device according to the embodiment.
FIG. 3 is a block diagram showing a configuration example of a display device according to the embodiment.
FIG. 4 is a diagram showing an example of display of the display device according to the embodiment.
FIG. 5 is a block diagram showing a configuration example of a vehicle according to the embodiment.
FIG. 6 is a flowchart showing an example of an operation of the display device according to the embodiment.
FIG. 7 is a flowchart showing an example of an operation of the vehicle according to the embodiment.

### DETAILED DESCRIPTION

In general, according to one embodiment, a code processing device includes an acquisition unit, a lane information generation unit, a code generation unit, and a display processing unit. The acquisition unit acquires traffic information which indicates the traffic conditions of a lane. The lane information generation unit generates lane information which indicates the traffic conditions of each lane based on the traffic information from each lane. The code generation unit generates a code which indicates the lane information. The display processing unit outputs the code.

Hereinafter, an embodiment will be described with reference to the accompanying drawings.

The road system according to the embodiment is installed at an interchange which includes a plurality of lanes, such as an entrance lane of an expressway, and the like. The road system provides vehicles entering the interchange or the like with information on each lane of the interchange, etc. In this embodiment, the road system is installed at an interchange of an expressway.

The interchange at which the road system is installed includes a plurality of lanes that vehicles can pass through. The interchange is configured to allow vehicles entering from at least one road to enter one lane selected from the plurality of lanes.

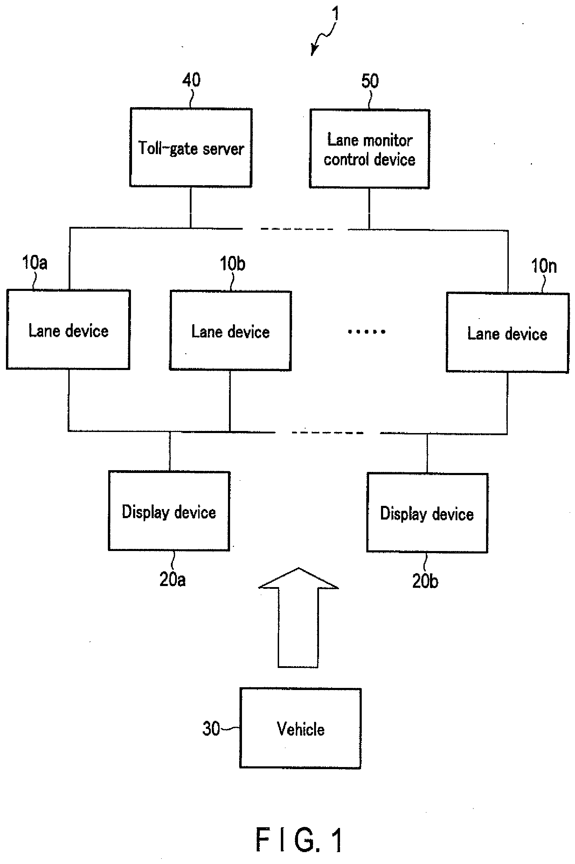

FIG. 1 is a block diagram showing a configuration example of a road system 1.

The road system 1 includes lane devices 10 (10a to 10n), display devices 20 (20a and 20b) (code processing device), a vehicle 30, a tollgate server 40, a lane monitor control device 50, etc., as shown in FIG. 1. In this embodiment, the interchange includes lanes a to n.

The lane devices 10 are installed in the lanes a to n, respectively. For example, the lane devices 10 are installed in a roadside zone of each lane. Also, the lane devices 10 may include a gantry formed on the lanes.

The lane devices 10 send traffic information which indicates the conditions of the lanes to the display devices 20. In addition, the lane devices 10 perform an operation related to toll collection from vehicles passing through the lanes.

A configuration example of the lane devices 10 and the traffic information will be described in detail later on.

The number of lane devices 10 included in the road system 1 is not limited to a specific number.

The display devices 20 display a code which indicates lane information indicating the conditions of each lane. The display device 20a displays a code to vehicles traveling on a road before the plurality of lanes. Namely, the display device 20a displays a code to vehicles that are located at a position where any of the lanes can be selected as a course to take. A configuration example of the display devices 20 and the lane information will be described in detail later on.

In this embodiment, the road system 1 includes two display devices 20 (20a and 20b). For example, the display device 20a is arranged in one of the roadside zones (e.g., the roadside zone on the left side in the traveling direction) of the road before the plurality of lanes, to display a code in this roadside zone. Also, the display device 20b is arranged in the other roadside zone (e.g., the roadside zone on the right side in the traveling direction) of the road before the plurality of lanes, to display a code in this roadside zone.

The road system 1 may include one display device 20. The road system 1 may also include three or more display devices 20.

The vehicle 30 selects one lane from the plurality of lanes of the interchange, to pass therethrough. The vehicle 30 is controlled by automated driving. The vehicle 30 reads the code displayed by the display devices 20. The vehicle 30 acquires the lane information from the code read by the vehicle 30, and selects a lane to pass through based on the lane information. A configuration example of the vehicle 30 will be described in detail later on.

The tollgate server 40 charges a user a usage fee of the road based on the payment information from the lane devices 10. For example, the payment information indicates an ID identifying the user, the amount of money, etc. In this embodiment, the tollgate server 40 supports payments made using an ETC (electronic toll collection) card. For example, the payment information indicates an ID of the ETC card as the ID identifying the user. Based on the payment information, the tollgate server 40 settles the payment of the usage fee of the user by using credit card information, etc.

The lane monitor control device 50 controls the congestion conditions, etc. of each lane based on the information from the lane devices 10.

In addition, the road system 1 may add a necessary structure as appropriate, or delete an unnecessary structure.

Next, a configuration example of the lane devices 10 will be described.

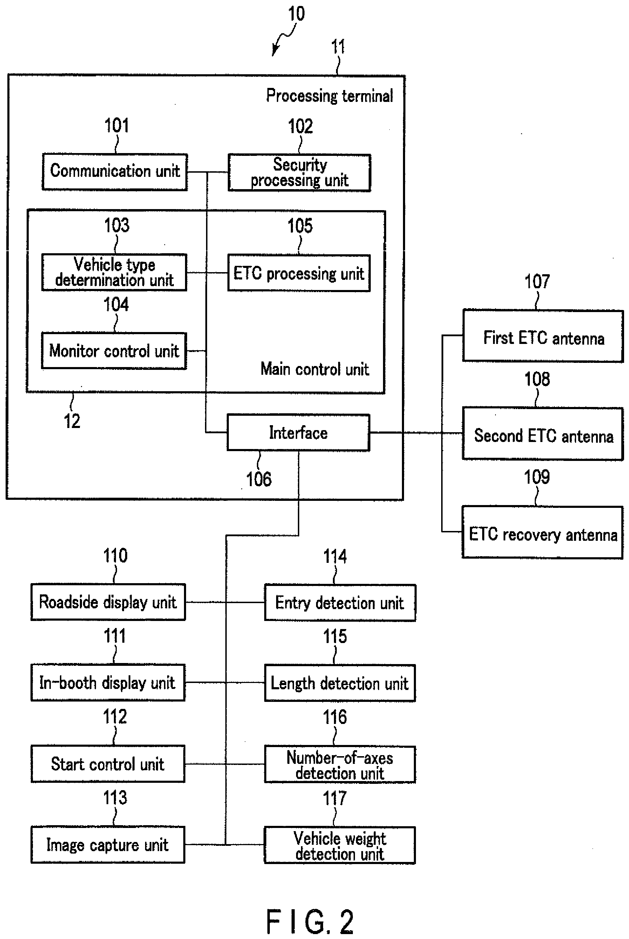

FIG. 2 is a block diagram showing a configuration example of the lane device 10.

The lane device 10 includes a processing terminal 11, a first ETC antenna 107, a second ETC antenna 108, an ETC recovery antenna 109, a roadside display unit 110, an in-booth display unit 111, a start control unit 112, an image capture unit 113, an entry detection unit 114, a length detection unit 115, a number-of-axes detection unit 116, and a vehicle weight detection unit 117, etc., as shown in FIG. 2.

The processing terminal 11 controls the entire lane device 10. The processing terminal 11 includes a main control unit 12, a communication unit 101, a security processing unit 102, an interface 106, and the like. For example, the processing terminal 11 is installed in the roadside zone of the road.

The main control unit 12 controls the entire processing terminal 11. The main control unit 12 includes a vehicle type determination unit 103, a monitor control unit 104, and an ETC processing unit 105, etc.

The first ETC antenna 107 is an antenna for performing wireless communication with an on-vehicle ETC device of the vehicle 30 passing through the lane. For example, the first ETC antenna 107 is used to receive ETC card information from the on-vehicle ETC device.

The second ETC antenna 108 is configured in a manner similar to the first ETC antenna 107. The second ETC antenna 108 may be installed at a position different from that of the first ETC antenna 107.

The ETC recovery antenna 109 is an antenna for performing wireless communication with the on-vehicle ETC device of the vehicle 30 in the case where the communication with the on-vehicle ETC device using the first ETC antenna 107 and the second ETC antenna 108 fails.

The roadside display unit 110 displays various kinds of information to a fellow passenger of the vehicle 30 according to a signal from the main control unit 12. For example, the roadside display unit 110 displays a usage fee, etc. For example, the roadside display unit 110 is installed at a position on a side of the lane where a user can see it.

The in-booth display unit 111 is a display unit which is installed inside a booth where there is an attendant. The in-booth display unit 111 displays various kinds of information to the attendant in the booth according to the signal from the main control unit 12.

The start control unit 112 controls starting of the vehicle 30 which passes through the lane based on the signal from the main control unit 12. For example, the start control unit 112 includes a bar. For example, the start control unit 112 lowers the bar to the lane to prevent the vehicle 30 from starting. In addition, the start control unit 112 raises the bar from the lane to prompt the vehicle 30 to start.

The image capture unit 113 captures an image of the vehicle 30 passing through the lane. The image capture unit 113 sends a captured image to the main control unit 12.

The entry detection unit 114 detects the vehicle 30 entering the lane. For example, the entry detection unit 114 detects the vehicle 30 by using a laser or the like. The entry detection unit 114 sends, for example, a signal indicating that the vehicle 30 has been detected, to the main control unit 12.

The length detection unit 115 detects the size of the vehicle 30. For example, the length detection unit 115 detects whether the entire length of the vehicle 30 is greater than a predetermined length. For example, the length detection unit 115 sends a predetermined signal to the main control unit 12 if the entire length of the vehicle 30 is greater than a predetermined length.

The number-of-axes detection unit 116 detects the number of axes of the vehicle 30. For example, the number-of-axes detection unit 116 may detect the number of axes by using the image of the vehicle 30. For example, the number-of-axes detection unit 116 sends a signal indicating the detected number of axes to the main control unit 12.

The vehicle weight detection unit 117 detects the weight of the vehicle 30 passing through the lane. For example, the vehicle weight detection unit 117 is installed under the road of the lane, to detect the weight of the vehicle 30 passing on the road.

The vehicle weight detection unit 117 sends a signal indicating the detected weight to the main control unit 12.

The communication unit 101 sends/receives data by wire or wirelessly to/from an external device. In this embodiment, the communication unit 101 sends/receives data to/from the tollgate server 40 and the lane monitor control device 50. The communication unit 101 may comprise an interface which supports communication with the tollgate server 40 and an interface which supports communication with the lane monitor control device 50.

The security processing unit 102 performs processing related to communication security, such as encryption and decryption, when communicating with the on-vehicle ETC device mounted on the vehicle 30.

The interface 106 sends/receives data to/from a device arranged outside of the processing terminal 11. In this embodiment, the interface 106 sends/receives data to/from the first ETC antenna 107, the second ETC antenna 108, the ETC recovery antenna 109, the roadside display unit 110, the in-booth display unit 111, the start control unit 112, the image capture unit 113, the entry detection unit 114, the length detection unit 115, the number-of-axes detection unit 116, and the vehicle weight detection unit 117, etc.

The vehicle type determination unit 103 determines the type of the vehicle 30 passing through the lane. For example, the type of vehicle is a classification for determining a usage fee of vehicles, such as standard-sized cars, medium-sized cars, large cars, and extra-large cars.

The vehicle type determination unit 103 determines the type of the vehicle 30 based on the number of axes of the vehicle 30, the length of the vehicle 30, the weight of the vehicle 30, or the like. For example, the vehicle type determination unit 103 acquires information on the vehicle 30 from each unit of the lane device 10 via the interface 106. The vehicle type determination unit 103 determines the type of the vehicle 30 based on the acquired information.

The monitor control unit 104 generates traffic information which indicates the conditions of the lanes.

The traffic information indicates whether the lanes in which the lane device 10 is installed are passable or not. For example, the traffic information indicates that the lanes are passable if the lanes are compatible with the ETC system. The traffic information indicates that the lanes are passable if the lanes are, for example, ETC exclusive lanes, or ETC/general mixed lanes. Since both ETC exclusive lanes and ETC/general mixed lanes are compatible with the ETC system, these lanes are defined as ETC compatible lanes.

In addition, if the lanes are not compatible with the ETC system, the traffic information indicates that the lanes are impassable. For example, if the lanes are general lanes, the traffic information indicates that the lanes are impassable.

In this embodiment, the ETC exclusive lanes are lanes in which the ETC system is installed and only the payment using the ETC system is made. The ETC/general mixed lanes are lanes in which the ETC system is installed but both the payment using the ETC system and the payment not using the ETC system are made. In addition, the general lanes are lanes in which the ETC system is not installed and only the payment not using the ETC system is made.

If the lanes are impassable due to some trouble such as an accident, the traffic information may indicate that the lanes are impassable.

Moreover, the traffic information indicates the congestion condition of the lanes. For example, the traffic information may indicate the number of vehicles that line up in a lane, etc., as the congestion condition of the lane. In addition, the traffic information may indicate, as the congestion condition of the lanes, a classification indicating the congestion condition, such as "normal" and "congested."

The monitor control unit 104 generates the traffic information based on the information input by an operator, the information from each unit of the lane device 10, etc. For example, the monitor control unit 104 identifies whether the lanes are passable or not based on an operation input to the processing terminal 11 by the operator.

In addition, the monitor control unit 104 specifies, as the congestion condition, the number of vehicles that line up in a lane based on, for example, images captured by the image capture unit 113, etc. The monitor control unit 104 may specify, as the congestion condition, a classification of the congestion condition corresponding to the number of vehicles.

The monitor control unit 104 generates the traffic information which indicates whether the lanes are passable or not, and the congestion condition of the lanes.

The monitor control unit 104 updates the traffic information as necessary. For example, the monitor control unit 104 updates the traffic information at a predetermined interval. In addition, the monitor control unit 104 may update the traffic information according to the change of the traffic conditions of the lanes. For example, the monitor control unit 104 may update the traffic information when a change occurs in whether the lanes are passable or not, or when a change occurs in the congestion condition.

The monitor control unit 104 sends the traffic information to the display devices 20 through the communication unit 101, or the like. For example, the monitor control unit 104 sends the traffic information at a predetermined interval. In addition, the monitor control unit 104 may send the traffic information if the monitor control unit 104 updates the traffic information.

The ETC processing unit 105 carries out settlement using the ETC system. For example, the ETC processing unit 105 acquires the information of the ETC card from the on-vehicle ETC device of the vehicles passing through the lanes, via the first ETC antenna 107, the second ETC antenna 108, or the ETC recovery antenna 109. The ETC processing unit 105 determines the usage fee based on the type of the vehicle determined by the vehicle type determination unit 103. The ETC processing unit 105 settles the payment of the usage fee by using the information of the ETC card. For example, the ETC processing unit 105 sends the information of the ETC card and the payment information indicating the usage fee to the tollgate server 40, etc. through the communication unit 101.

The lane device 10 may add a necessary structure as appropriate, or delete an unnecessary structure.

The main control unit 12 comprises a CPU and a memory, for example. The main control unit 12 is, for example, a PC. The vehicle type determination unit 103, the monitor control unit 104, and the ETC processing unit 105 are implemented by the CPU and memory, for example.

Next, a configuration example of the display device 20 will be described.

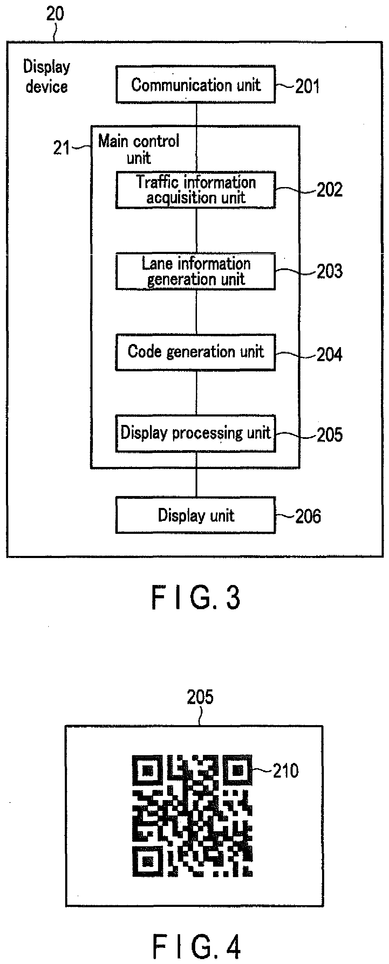

FIG. 3 is a block diagram showing a configuration example of the display device 20.

The display device 20 includes a main control unit 21, a communication unit 201, a display unit 206, etc., as shown in FIG. 3.

The main control unit 21 controls the entire display device 20. The main control unit 21 includes a traffic information acquisition unit 202, a lane information generation unit 203, a code generation unit 204, and a display processing unit 205, etc.

The communication unit 201 is an interface for sending/receiving data to/from the lane devices 10. The main control unit 21 receives traffic information from each lane device 10 through the communication unit 201.

The display unit 206 displays a code indicating the lane information based on a signal from the main control unit 21. The display unit 206 is installed at a position where the code can be displayed to vehicles traveling on a road before each lane. Namely, the display unit 206 displays a code to vehicles that are located at a position where any of the lanes can be selected as a course to take. The display unit 206 comprises, for example, a liquid crystal display, etc.

The traffic information acquisition unit 202 (acquisition unit) acquires traffic information from each lane device 10 through the communication unit 201. For example, the traffic information acquisition unit 202 may send a request to each lane device 10 at a predetermined interval and receive traffic information as a response. In addition, the traffic information acquisition unit 202 may receive the traffic information sent from each lane device 10 without sending a request. For example, the traffic information is information updated according to the change of the traffic conditions of the lanes; and each lane device 10 may send the traffic information according to the update.

The lane information generation unit 203 generates lane information based on the traffic information of each lane. The lane information indicates whether each lane is passable or not. For example, the lane information indicates passable lanes and impassable lanes.

Moreover, the lane information indicates the congestion condition of the passable lanes. For example, the lane information correlates the passable lanes and the congestion condition of the lanes with each other and stores them.

For example, the lane information generation unit 203 analyzes the traffic information received from each lane device 10. For example, the lane information generation unit 203 specifies the passable lanes and the impassable lanes based on each piece of traffic information received. In addition, the lane information generation unit 203 specifies the congestion condition of each passable lane based on each piece of traffic information received.

If the traffic information indicates the number of vehicles that line up in a lane, the lane information generation unit 203 may make a classification which indicates the congestion condition, such as "normal" and "congested," as the congestion situation of each lane.

The lane information generation unit 203 generates lane information based on the specified information.

The code generation unit 204 generates a code which indicates the lane information. The code is a code readable by the main control unit of the vehicle 30 described below. For example, the code is a one-dimensional code, such as a bar code, or a two-dimensional code, such as a QR code (registered trademark). The code generation unit 204 may generate a plurality of codes. For example, the code generation unit 204 may generate a bar code which indicates the lane information, and a QR code which indicates the lane information.

The display processing unit 205 outputs, to the display unit 206, the code generated by the code generation unit 204. If the code generation unit 204 generates a plurality of codes, the display processing unit 205 may display a plurality of codes. The display processing unit 205 may also display a character string which indicates at least a part of the lane information. For example, the display processing unit 205 may display the congestion situation of the passable lanes in a character string.

FIG. 4 shows an exemplary display of the display unit 206.

The display unit 206 displays a code 210 which indicates the lane information, as shown in FIG. 4. In this embodiment, the display unit 206 displays a QR code as the code 210.

The display device 20 may add a necessary structure as appropriate, or delete an unnecessary structure.

The main control unit 21 comprises a CPU and a memory, for example. The main control unit 21 is, for example, a PC. The lane information generation unit 203, the code generation unit 204, and the display processing unit 205 are implemented by the CPU and memory, for example.

Next, a configuration example of the vehicle 30 will be described.

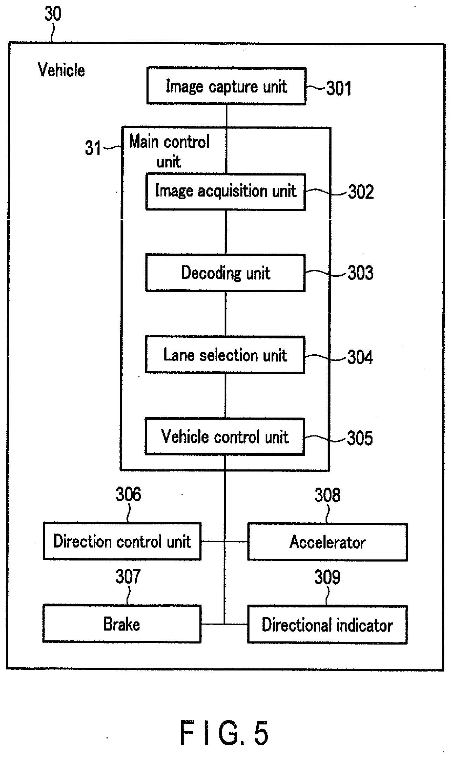

FIG. 5 is a block diagram showing a configuration example of the vehicle 30.

The vehicle 30 includes a main control unit 31 (vehicle control device), an image capture unit 301, a direction control unit 306, a brake 307, an accelerator 308, and a directional indicator 309, etc., as shown in FIG. 5.

The main control unit 31 controls the entire vehicle 30. The main control unit 31 includes an image acquisition unit 302, a decoding unit 303, a lane selection unit 304, and a vehicle control unit 305, etc.

The image capture unit 301 captures an image of the outside of the vehicle 30. The image capture unit 301 captures the image of the code 210 displayed by the display unit 206. For example, the image capture unit 301 captures the image of the forward direction of the vehicle 30 at a predetermined angle. The image capture unit 301 sends the captured image to the main control unit 31.

The direction control unit 306 controls the traveling direction of the vehicle 30 based on a signal from the main control unit 31. For example, the direction control unit 306 controls the direction of the front wheels of the vehicle 30.

The brake 307 decelerates or stops the vehicle 30 based on the signal from the main control unit 31. The brake 307 is, for example, a disc brake which sandwiches a disc rotating in connection with the wheel axis.

The accelerator 308 controls the speed of the vehicle 30 based on the signal from the main control unit 31. If the vehicle 30 is a gas vehicle, for example, the accelerator 308 controls the amount of gasoline supplied to the engine of the vehicle 30. If the vehicle 30 is an electric car, the accelerator 308 controls the electric power supplied to the motor of the vehicle 30.

The directional indicator 309 lights up based on the signal from the main control unit 31. The directional indicator 309, for example, comprises a blinker and the like.

The image acquisition unit 302 acquires the image taken by the image capture unit 301. For example, the image acquisition unit 302 acquires the image from the image capture unit 301 at a predetermined interval.

The decoding unit 303 (read unit) specifies the code 210 from the image acquired by the image acquisition unit 302 and decodes the code 201. For example, the decoding unit 303 performs a raster scan of the image and specifies the code 210. When the code 210 is specified, the decoding unit 303 decodes the code 210 according to a predetermined algorithm.

The decoding unit 303 decodes the code 210 and acquires the lane information.

The lane selection unit 304 selects a lane in which to travel based on the lane information acquired by the decoding unit 303. For example, the lane selection unit 304 specifies passable lanes based on the lane information. If there is one passable lane, the lane selection unit 304 selects the lane.

If there is a plurality of passable lanes, the lane selection unit 304 selects one lane from the plurality of passable lanes. For example, the lane selection unit 304 selects a lane based on the congestion condition of each passable lane. For example, the lane selection unit 304 selects a passable lane that is least congested. Alternatively, the lane selection unit 304 preferentially selects an ETC exclusive lane if there is a plurality of passable lanes. Alternatively, the lane selection unit 304 selects an ETC exclusive lane if there is a plurality of passable lanes.

The lane selection unit 304 may select a lane based on a traveling direction after passing through the lane. For example, the lane selection unit 304 may select a lane close to a road that is entered after passing through the lane. The vehicle 30 includes a navigation system, for example. The navigation system registers the destination information that is input and determines the traveling direction (e.g., an inbound lane, an outbound lane, etc.) based on the destination information. The lane selection unit 304 selects a lane based on the traveling direction determined by the navigation system. The lane selection unit 304 may select a lane based on the congestion conditions and the traveling direction.

The method for the lane selection unit 304 to select a lane is not limited to a specific method.

The vehicle control unit 305 makes the vehicle 30 travel in the lane selected by the lane selection unit 304. For example, the vehicle control unit 305 makes the vehicle 30 travel in the lane by controlling the direction control unit 306, the brake 307, and the accelerator 308, etc., based on the image taken by the image capture unit 301. The vehicle control unit 305 may implement other automated control, such as automated driving on the road.

The vehicle 30 may add a necessary structure as appropriate, or delete an unnecessary structure.

The main control unit 31 comprises a CPU and a memory, for example. The decoding unit 303, the lane selection unit 304, and the vehicle control unit 305 are implemented by the CPU and memory, for example.

Next, an example of an operation of the display device 20 will be described.

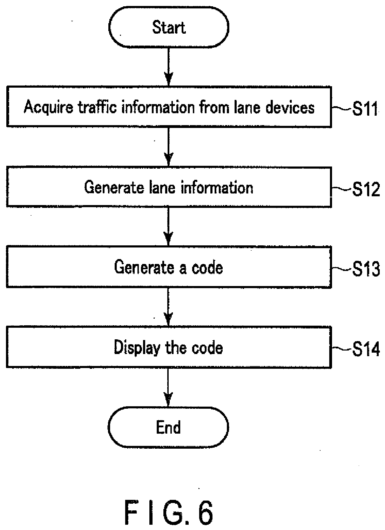

FIG. 6 is a flowchart illustrating the example of the operation of the display device 20.

First, the traffic information acquisition unit 202 of the main control unit 21 of the display device 20 receives traffic information from each lane device 10 through the communication unit 201 (S11). When the traffic information acquisition unit 202 receives the traffic information, the lane information generation unit 203 generates lane information based on each piece of traffic information (S12).

When the lane information generation unit 203 generates the lane information, the code generation unit 204 generates a code which indicates the lane information generated by the lane information generation unit 203 (S13). When the code generation unit 204 generates the code, the display processing unit 205 displays the code generated by the code generation unit 204 on the display unit 206 (S14).

When the display processing unit 205 displays the code, the display device 20 terminates the operation.

The display device 20 may update the code as necessary. For example, the display device 20 may perform S11 to S14 as necessary. For example, the display device 20 may update the code every time it receives the traffic information. The display device 20 may also update the code at a predetermined interval.

Next, an example of an operation of the vehicle 30 will be described.

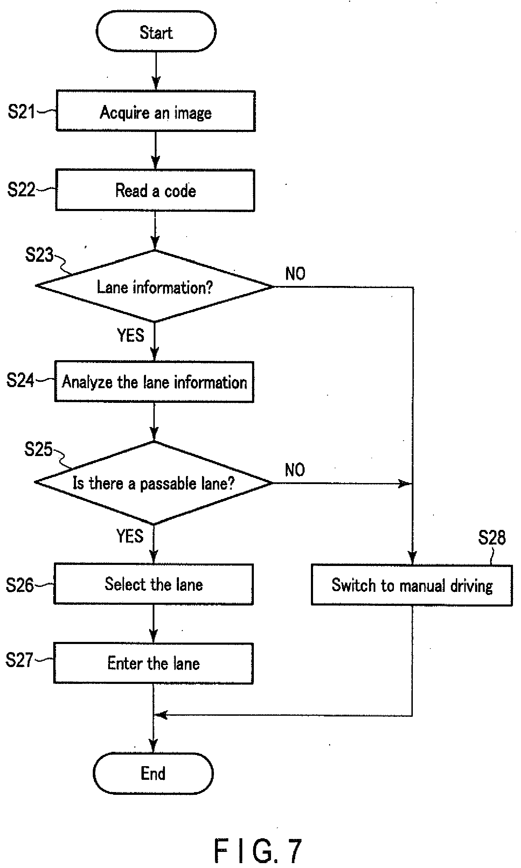

FIG. 7 is a flowchart illustrating the example of the operation of the vehicle 30.

First, the image acquisition unit 302 of the main control unit 31 of the vehicle 30 acquires an image taken by the image capture unit 301 (S21). When the image acquisition unit 302 acquires the image, the decoding unit 303 reads a code in the image (S22). If there is no code in the image, the decoding unit 303 scans an image until an image including a code is acquired.

When the decoding unit 303 reads the code, the main control unit 31 determines whether the code includes the lane information (S23). If the main control unit 31 determines that the code includes the lane information (S23, YES), the lane selection unit 304 analyzes the lane information (S24).

Upon analyzing the lane information, the lane selection unit 304 determines whether there is a passable lane based on the lane information (S25). If it is determined that there is a passable lane (S25, YES), the lane selection unit 304 selects a lane through which the vehicle 30 passes (S26).

If the lane selection unit 304 selects a lane, the vehicle control unit 305 makes the vehicle 30 enter the lane selected by the lane selection unit 304 (S27).

If the main control unit 31 determines that the code does not include the lane information (S23, NO), or if the lane selection unit 304 determines that there is no passable lane (S25, NO), the main control unit 31 switches to manual driving (S28).

If the vehicle control unit 305 makes the vehicle 30 enter the lane selected by the lane selection unit 304, or if the main control unit 31 switches to manual driving, the main control unit 31 terminates the operation.

The vehicle control unit 305 may continue automated driving even after it makes the vehicle 30 enter the lane. The main control unit 31 may notify a fellow passenger of the lane selected by the lane selection unit 304 by using an image, a sound, or the like.

In addition, the vehicle 30 need not comprise the vehicle control unit 305. For example, the main control unit 31 may present a driver with the lane selected by the lane selection unit 304 as a candidate for the lane to enter.

The road system configured in the manner described above acquires, from each lane, the traffic information indicating whether lanes are passable or not and the congestion condition of the lanes. The road system generates the lane information which indicates the conditions of the lanes based on the traffic information. The road system presents the vehicle with the code which indicates the lane information. Accordingly, the road system enables presentation of impassable lanes to the vehicle which performs automated driving.

The vehicle decodes the code and acquires the lane information. The vehicle selects a passable lane based on the lane information and passes through the lane by automated driving.

Accordingly, the road system can prevent the vehicle which performs automated driving from entering an impassable lane.

While a certain embodiment has been described, the embodiment has been presented by way of example only, and is not intended to limit the scope of the inventions. Indeed, the novel embodiment described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A code processing device (20), comprising:
an acquisition unit (202) which acquires traffic information indicating traffic conditions of a lane;
a lane information generation unit (203) which generates lane information indicating traffic conditions of each lane based on the traffic information from each lane;
a code generation unit (204) which generates a code (210) indicating the lane information; and
a display processing unit (205) which outputs the code.

2. The code processing device according to claim 1,
wherein the traffic information includes information indicating whether a lane is passable or not, and
wherein the lane information includes information indicating whether each lane is passable or not.

3. The code processing device according to claim 1,
Wherein the traffic information includes information indicating a congestion condition of a lane, and
wherein the lane information includes information indicating a congestion condition of each lane.

4. The code processing device according to claim 1,
wherein the code is a two-dimensional code.

5. The code processing device according to claim 1,
Wherein the traffic information is information updated according to a change of traffic conditions of a lane, and
wherein the acquisition unit acquires the traffic information sent according to an update, or receives the traffic information at a predetermined interval.

6. A code processing method, comprising:
acquiring traffic information indicating traffic conditions of a lane;
generating lane information indicating traffic conditions of each lane based on the traffic information from each lane;
generating a code (210) indicating the lane information; and
outputting the code.

7. The code processing method according to claim 6,
wherein the traffic information includes information indicating whether a lane is passable or not, and
wherein the lane information includes information indicating whether each lane is passable or not.

8. The code processing method according to claim 6,
Wherein the traffic information includes information indicating a congestion condition of a lane, and
wherein the lane information includes information indicating a congestion condition of each lane.

9. A vehicle control device (31), comprising:
an image acquisition unit (302) which acquires an image;
a read unit (303) which reads a code indicating lane information indicating traffic conditions of each lane from the image; and
a selection unit (304) which selects a lane for a vehicle to pass through based on the lane information.

10. The vehicle control device according to claim 9,
wherein the lane information includes information indicating whether each lane is passable or not, and
wherein the selection unit selects a lane for the vehicle to pass through based on the information indicating whether each lane is passable or not.

11. The vehicle control device according to claim 9,
wherein the lane information includes information indicating a congestion condition of each lane, and
wherein the selection unit selects a lane for the vehicle to pass through based on the congestion condition of each lane.

12. The vehicle control device according to any one of claims 9 to 11, further comprising a vehicle control unit (305) which makes the vehicle pass through the lane selected by the selection unit.
